(19) **Europäisches Patentamt / European Patent Office / Office européen des brevets**

(11) **EP 3 593 468 B1**

(12) **EUROPEAN PATENT SPECIFICATION**

(45) Date of publication and mention of the grant of the patent:
**20.10.2021 Bulletin 2021/42**

(21) Application number: **18712070.4**

(22) Date of filing: **08.03.2018**

(51) Int Cl.:
***H04B 10/071*** *(2013.01)*      ***G01M 11/00*** *(2006.01)*

(86) International application number:
**PCT/US2018/021484**

(87) International publication number:
**WO 2018/165388 (13.09.2018 Gazette 2018/37)**

(54) **HIGH RESOLUTION CORRELATION OPTICAL TIME DOMAIN REFLECTOMETER**

HOCHAUFLÖSENDES OPTISCHES KORRELATIONSZEITBEREICHSREFLEKTOMETER

RÉFLECTOMÈTRE OPTIQUE TEMPOREL À CORRÉLATION HAUTE RÉSOLUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2017 US 201762469596 P**
**07.03.2018 US 201815914450**

(43) Date of publication of application:
**15.01.2020 Bulletin 2020/03**

(73) Proprietor: **Panduit Corp.**
**Tinley Park, Illinois 60487 (US)**

(72) Inventors:
• **CASTRO, Jose**
 **Naperville, Illinois 60565 (US)**
• **PIMPINELLA, Richard**
 **Frankfort, Illinois 60423 (US)**
• **KOSE, Bulent**
 **Burr Ridge, Illinois 60527 (US)**
• **LANE, Brett**
 **Hinsdale, Illinois 60521 (US)**

(74) Representative: **Roberts, Gwilym Vaughan et al**
 **Kilburn & Strode LLP**
 **Lacon London**
 **84 Theobalds Road**
 **London WC1X 8NL (GB)**

(56) References cited:
**EP-A1- 2 209 226**      **WO-A1-2013/134394**
**US-A1- 2009 027 656**      **US-A1- 2014 078 506**

**Description**

**CROSS REFERENCE TO RELATED APPLICATIONS**

This application claims priority to U.S. Provisional Application No. 62/469,596, filed March 10, 2017,

**FIELD OF INVENTION**

Embodiments of the present invention generally relate to the field of fiber optic communication, and more specifically, to optical time domain reflectometer apparatuses used for testing the integrity of a communication channel.

**BACKGROUND**

Due to its high bandwidth, low dispersion, low attenuation, and immunity to electromagnetic interference among other advantages single-mode and multimode optical fibers are the standard transmission media used for intermediate and long reach high-speed communication applications in data centers, enterprise networks, metropolitan area networks (MANs), and long haul systems. Optical channels often contain other passive elements such as optical connectors, adapters, patch cords, splitters, combiners, and filters.

It is well known that channel impairments caused by excess attenuation and reflections due to poor quality connectors, splicers, or filters can significantly degrade channel performance. For example, excess connector loss reduces the signal and increases the noise thus decreasing the signal-to-noise ratio (SNR) at the receiver increasing the bit error rate (BER). Moreover, reflected light due to poor physical contact in a mated pair of connectors can cause unwanted feedback to the laser affecting the frequency modulation response and noise.

The test instrument commonly used to characterize and certify an optical fiber channel is the optical time domain reflectometer (OTDR). An OTDR injects a pulse of light (typically Ins to 100μs) into one end of the channel under test. As the pulse propagates light is scattered (Rayleigh backscattering) or reflected back from points along the fiber to the same end from which the pulse originated. The amplitude of the scattered and reflected light along the fiber channel is measured and integrated as function of time. Given the refractive index of the fiber, the temporal measured data is converted to the spatial domain so that the measured events are plotted as a function of fiber length.

The reflected power is caused by Fresnel reflections due to discontinuities in the channel medium caused by connector misalignments, end face scratches, or small gaps between mated connector pairs. Rayleigh scattering is produced by intrinsic material properties such as particles or defects inside the fiber that are smaller than the transmitted light wavelength, and its backscattering power is typically four to six orders of magnitude lower than the launch power.

The temporal resolution of the system is limited by the launch pulse width, $T_p$. The temporal position of a channel with discrete reflection events can be represented by

$$\theta = \sum_i \rho_i \delta(t - \tau_i) \qquad (1)$$

where $\delta(t)$ is the delta Dirac function which is equal to zero for $t \neq \tau$ and equal to one for $t = \tau$. The reflection event occurs at,

$$\tau_i = (i - 1)\Delta t \qquad (2)$$

where $i$ is the position index of the discrete reflection and $\Delta t$ is the sampling period.

The temporal delays in (1) can be directly converted to light travel distance by simply multiplying the time with the speed of light of the tested fiber

$$x_i = (i - 1)\Delta x \qquad (3)$$

where $\Delta x$ is the nearest spatial separation in the channel, computed using,

$$\Delta x = \frac{c\Delta t}{2n} \qquad (4)$$

where c is the speed of the light in vacuum, $n$ the refractive index of the fiber.

Although, the sampling period can be significantly lower than $T_p$, the OTDR spatial resolution is essentially limited by, $\Delta x_r = \dfrac{cT_p}{2n}$ . In an OTDR, the test pulse is transmitted repeatedly in order to average the received optical power from the resultant reflection events to improve the SNR of the reflection traces, $\Gamma$. The repetition rate, $R$, for a multiple of the maximum length to be measured, $L_{max}$, is defined as,

$$R = \frac{1}{T_R} = k\frac{2nL_{max}}{c} \qquad (5)$$

where $k$ is an arbitrary integer and $T_R$ the repetition period.

To detect the low optical power levels of the backscattered and reflected signals, OTDRs typically utilize high sensitivity photodetectors such as avalanche photodetector (APD) receivers. As a consequence of the high sensitivity of the APD, when a large Fresnel reflection is encountered, and a large optical signal is returned to the APD the device becomes saturated or "blinded" which at a minimum lasts as long as the pulse duration. When an APD is saturated it is unable to measure the optical power levels of the scattered or reflected light that may follow immediately after the initial reflective event. The duration that the APD is saturation plus the time it takes for the sensor to readjust to its maximum sensitivity is called the dead zone. The limitations in OTDRs include dead-zone, distance resolution, and sensitivity.

The limitations due to distance resolution and sensitivity are interrelated and therefore are more difficult to overcome in standard OTDRs. Both resolution and sensitivity depend on pulse width, a wider pulse transports more energy enabling longer test lengths. However, a wider pulse reduces measurement resolution since the system cannot resolve multiple events that fall within the width of the pulse. For a pulse width of 10ns the event resolution is 1m whereas for a pulse width of 40$\mu$s the resolution is 4000m.

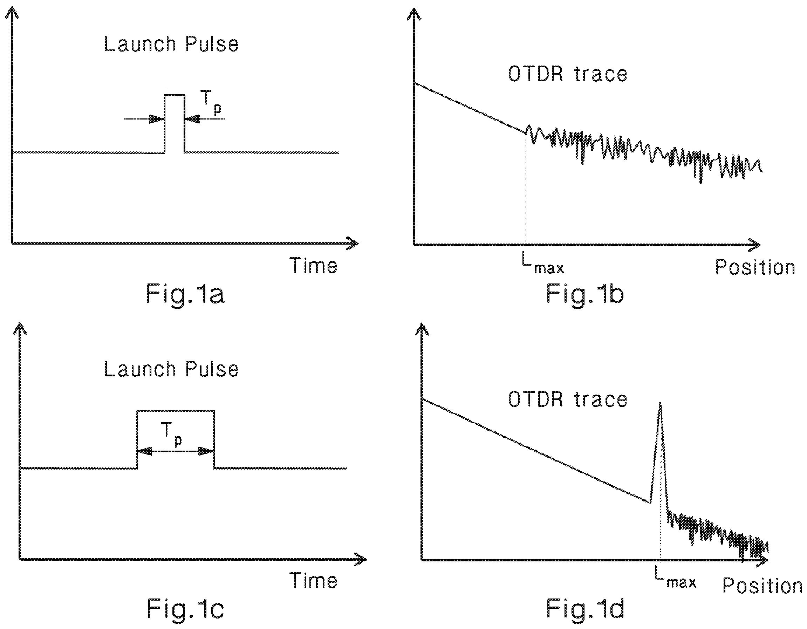

Figs. 1A thru 1D show representative OTDR traces for a narrow and wide pulse showing the differences in maximum test length.

To overcome the sensitivity and test length limitations when narrow pulse widths are utilized, one can implement better detection schemes. For example, thermal cooled avalanche photodiode detectors operating in Geiger mode can be utilized. Although this approach can work well in laboratory tests it is difficult to implement in portable OTDRs.

In addition to the standard OTDR test method, other approaches such as incoherent or coherent frequency domain techniques can be utilized. However, these techniques require more complex and expensive equipment and stable environmental conditions which make them impractical for portable test equipment. Other types of OTDRs often referred to as a correlation OTDRs, abbreviated here as C-OTDRs, have been developed to overcome the trade-offs between resolution, test length, and dead-zone.

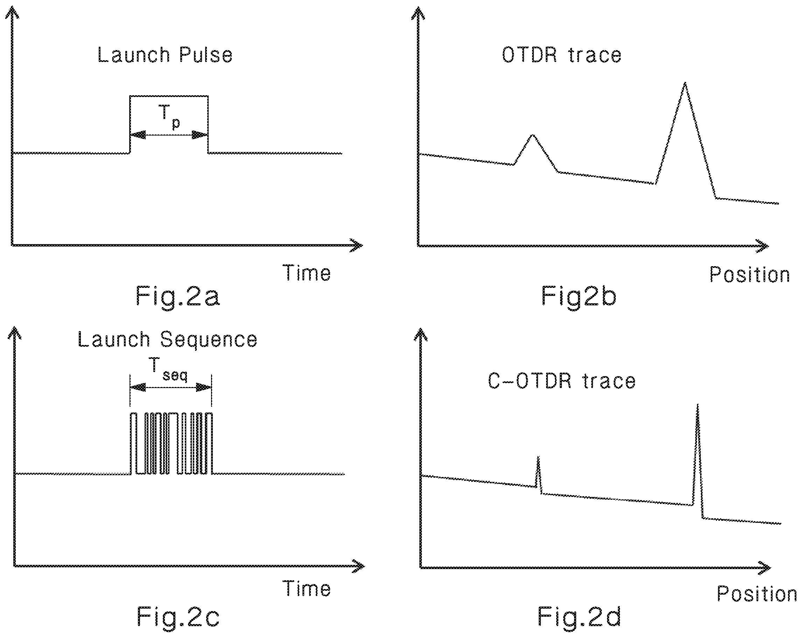

While standard OTDRs use a pulse to interrogate the channel under test as shown in Figs. 2A and 2B, a C-OTDR modulates the transmitted light with a Pseudo-random Noise (PN) sequence which is launched into one end of the optical fiber channel under test. A PN sequence is a sequence of binary numbers, e.g., $\pm 1$, which appears to be random; but is in fact perfectly deterministic. At different distances along the channel the discrete pulses are reflected by defects or mismatches in the channel medium and arrive at the optical detector with delays proportional to the traveled distance. The signal reflected from the optical fiber is correlated with the transmitted PN sequence and stored in memory. The correlation peaks in the resultant waveform after the correlation indicates the temporal position or equivalent distance of the reflection events in the optical channel. In standard OTDRs the duration of each pulse essentially defines the spatial resolution of the instrument whereas the number of bits in the sequence, $N$, determines the sensitivity, resolution and range of the C-OTDR.

C-OTDRs can overcome the effects of channel attenuation, dispersion and noise which distort and limit the range and resolution of traditional OTDRs. However, the correlation properties of the transmitted code, such as the ratio of its maximum to minimum autocorrelation value is important for the C-OTDR's sensitivity and resolution. The error resulting from the correlation properties of the utilized code is referred to as the correlation noise floor (CNF), which is the fundamental limit in the C-OTDR sensitivity. In general, the value of the CNF reduces as $N$ increases.

The C-OTDR can operate with periodical or aperiodical sequences. There are several periodical sequences that have good autocorrelation properties. These sequences can reduce CNF. However, periodical sequences require more complex signal processing and have the potential to saturate the detector due to signal overlap of multiple reflective events.

Aperiodical sequences can be significantly smaller allowing more dynamical range. However, it is difficult to find aperiodical sequences with low autocorrelation sidelobes. A method for compensating for the aperidical sequence limitation is the use of complementary sequences (CS). One such sequence was introduced by Marcel J. E. Golay in 1949, and in a later publication, M. J. E. Golay, "Complementary Series" IRE Trans.on information Theory, 1961, IT-7, p. 82, where he described examples and methods of CS construction. The Golay CS comprises pairs of sequences capable of minimizing the C-OTDR CNF due to their out-of-phase autocorrelation cancelation properties. Additional work on these sequences are described in P, Healy, "Complementary Correlation OTDR With Three Codewords", Electron. Lett., 1990, 26, pp. 70-71; Comparison of code gain using Golay and Hadamar, P. Healy, "Complementary Code Sets for OTDR," Electron. Lett., 1989, 25, pp. 692-693; P. hybrid codes shows applicability of Golay CS for OTDR.

The use of Golay codes in OTDRs is described in Cheng et. al. U.S. Pat. No. 4,743,753. In this prior art at least two sequences, *A* and *B* are transmitted. These sequences are defined as,

$$A_i = \frac{(1 + a_i)}{2} \quad B_i = \frac{(1 + b_i)}{2} \tag{6}$$

where, $i$ is the bit index of the CS, $0 \leq i < N$, and $a_i$ and $b_i$ are the Golay CSs which have the following properties,

$$a_{i-j} \oplus a_i + b_{i-j} \oplus b_i = \delta_{i,i} \tag{7}$$

where j is an index that represent an arbitrary delay, $\oplus$ is the correlation operator, and $\delta_{ij}$ is the delta Kronecker function.

Also, previous art shows that two additional sequences can be used for more effective noise reduction. The additional signals are shown below,

$$\overline{A_i} = \frac{(1 - a_i)}{2} \quad \overline{B_i} = \frac{(1 - b_i)}{2} \tag{8}$$

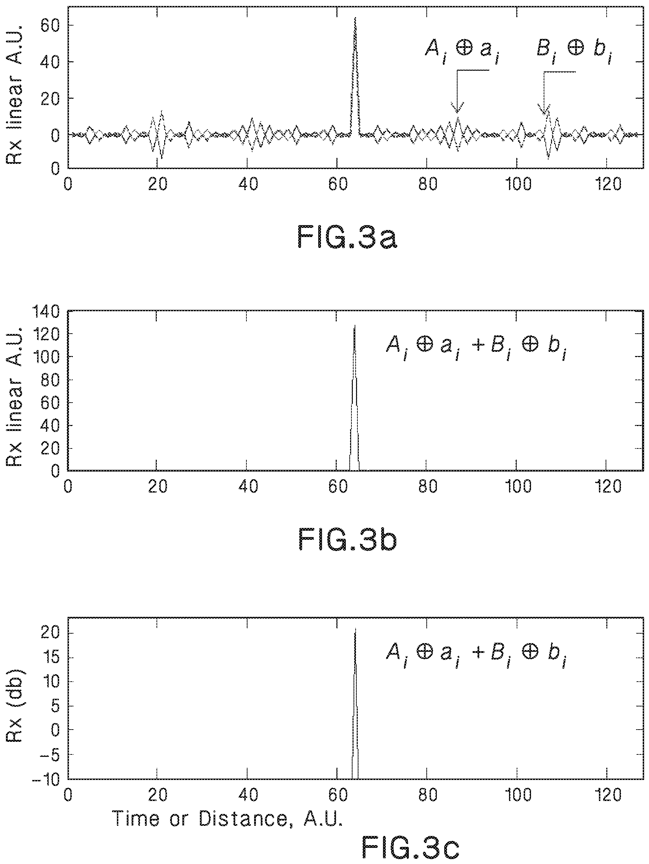

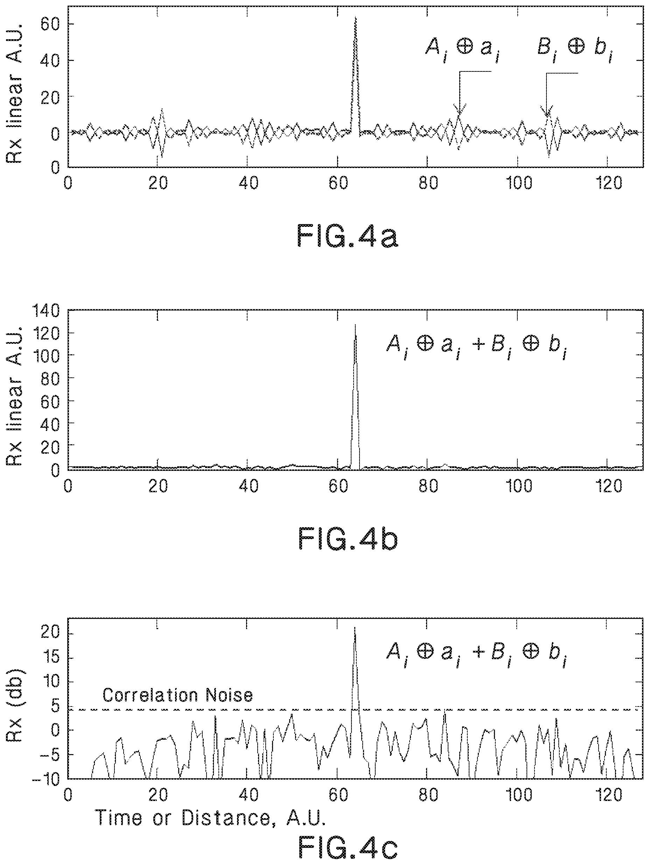

The properties of CSs with and without additive noise are illustrated in Figs. 3A thru 3C and Figs. 4A thru 4C.

In Fig. 3A the main peak of both autocorrelations have similar magnitude and sign, whereas their sidelobes have opposite sign and similar magnitude. In Figs. 3B and 3C it is shown that the sum of the individual autocorrelations enhances the peak reflection and completely eliminates the sidelobes. However, the channel noise reduces their effective sidelobe cancelation properties as shown in Figs. 4A thru 4C. Fig. 4A shows that the sidelobes of the autocorrelation traces are not completely anti-symmetric. Therefore, their sum does not produce their cancellation, as shown in Figs. 4B and 4C. The CNF can be appreciated in the log scale plot as shown in Fig. 4C.

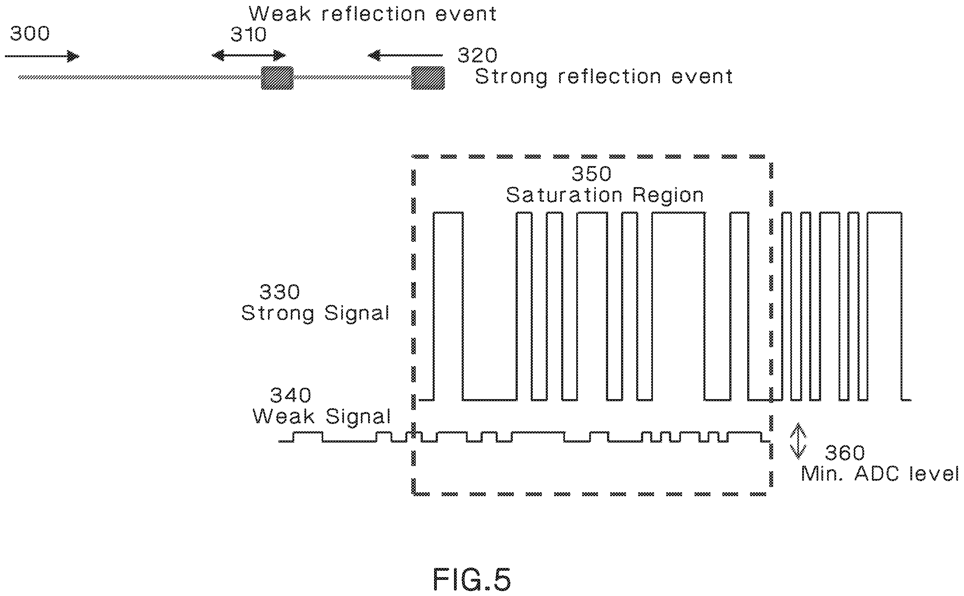

A second problem in C-OTDR is the limited dynamic range (DR) due to the Analog to Digital Converter's (ADC) limited resolution. This problem occurs when the signals of a strong reflective event, such as an open connector, overlaps with signals caused by weak reflective events. Fig. 5 shows the received pulse sequences from light propagating through fiber 300 with two discrete reflective events 310 and 320. The resultant signals from events 320 and 310 are illustrated by 330 and 340 respectively. The sum of 330 and 340 exceed the dynamic range, DR of the ADC, and 340 is not measured in the saturation region 350.

Attenuating the signal does not resolve the problem since it will reduce 340 beyond the ADC resolution. The DR limitation is exacerbated when high-speed ADCs, which tend to have lower resolution are utilized. For example, ADCs operating at speeds of several Giga-Samples per second (GSa/s) and have an effective bit resolution of 8 bits will have more DR issues than ADCs operating with a 12-bit resolution at several KSa/s. A simple solution to overcome the DR limitation is to increase the ADC bit resolution and reduce the test speed, however reduced speed is an undesirable test instrument attribute.

Due to the limitations in CNF and DR in state of the art C-OTDRs there is a need for a new improved apparatus and method for this class of test instrument.

US2009/027656 A1 discloses a system and method for time domain reflectometry (OTDR) using multi-resolution code sequences.

WO2013/134394 A1 discloses an optical communication system has a power dissipating element that is thermally coupled to an optical transmitter.

## SUMMARY

Accordingly, described herein are enhanced apparatuses and methods that reduce or minimize the effect of channel noise and have improved dynamic range that can be used in several applications within the data center, enterprise, or fiber manufacturing environment for characterizing optical channels, passive optical networks, and field terminated pre-polished connectivity among other uses.

At least one aspect of the present invention is directed towards a novel C-OTDR method and apparatus that can provide increased resolution, range, sensitivity, and dynamic range for measurements of reflective events of single-mode or multimode channels at several wavelengths. In an embodiment of the present invention the apparatus provides a means to achieve better sensitivity to overcome CNF to values below the limitation of C-OTDRs.

In another embodiment, the present invention provides a method for increasing dynamic range beyond the limitations due to ADC bit resolution and acquisition speed. In yet another embodiment of the present invention, a novel type of OTDR is capable of providing spatial resolution of a few millimeters is presented. In yet another embodiment of the present invention, the novel type of OTDR provides means to enhance the SNR on selected areas under test by using two or more laser sources. In yet another embodiment of the present invention, an OTDR provides means of measuring fault events in optical channel without need to stop data transmission. In yet another embodiment of the present invention, an OTDR provides a means of virtual terminating fiber channel to enable the observation of weak reflection events. In yet another embodiment, a C-OTDR operates also as a typical OTDR to measure Rayleigh scattering and losses of the optical fiber channel.

## BRIEF DESCRIPTION OF THE DRAWINGS

Figs. 1A thru 1D show the effect of pulse width on OTDR measurement range and sensitivity.

Figs. 2A thru 2D illustrate and compares the pulse trains and distance resolution between a traditional OTDR and C-OTDR.

Figs. 3A thru 3C shows the autocorrelations and the autocorrelation sum with no channel noise on linear and log scale.

Figs. 4A thru 4C shows the autocorrelations and the autocorrelation sum with channel noise on linear and log scale.

Fig. 5. illustrates the dynamic range limitation in traditional C-OTDRs when a channel contains strong and weak reflective events.

Fig. 6 shows the functional blocks of the disclosed C-OTDR apparatus.

Fig. 7 shows the expansion of D11, D12 D21 and D22.

Fig. 8 is a flow diagram for the CNF reduction method.

Figs. 9A thru 9C compare the CNF reduction methods of a simulated channel for the prior art method and the disclosed method using 3 iterations.

Fig. 10 is a block diagram of the disclosed method for increasing DR.

Fig 11 is an example of a channel with two reflection events: $\rho_A \ll \rho_B$ transmitted signal shows a delay. The assignation of $\Delta\tau = T_\lambda$ enables the cancellation of the stronger reflection event.

Figs. 12A thru 12C show the simulated backscattered optical signals from transmitters before arriving at the receiver and after optoelectronic conversion for regions that correspond to the weaker and stronger reflection.

Figs. 13A and 13B show the simulated correlation traces at different stages of the process and the sum without filtering.

Figs. 14A and 14B show the simulated correlation traces of the sum after low frequency filtering and the subtraction of negative peaks to the positive peaks.

Figs. 15A and 15B show the resultant traces with and without enhanced DR showing the effects of strong reflections.

## DETAILED DESCRIPTION

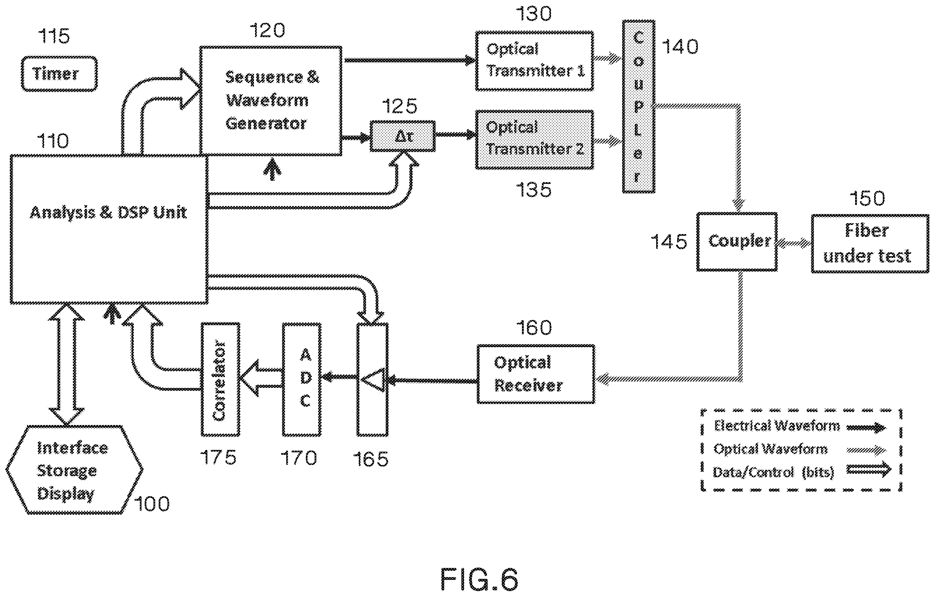

An explementary diagram of a C-OTDR in accordance with an embodiment of the present invention is shown in Fig. 6. The C-OTDR includes optical transmit and receive elements, optical couplers and logic circuits for timing, signal processing, control, and display. User interface 100 includes a display screen and programmable memory to enable the operator to input and store test parameters such as laser wavelength, resolution, sensitivity, and fiber refractive index among others. Functional block 110 represents a CPU and local memory used to perform the analysis, generate the reflection traces, and apply advanced digital signal processing (DSP) for CNF reduction and DR enhancement. Function 110 selects and controls the transmission and code sequence used by transmitters 130 and 135, as well as the delays and equalization scheme that occur in function 125. Function 110 also controls the information flow from/to 100 for operator input, displaying, and storage. Functional block 115 provides the clock and timing signal to all the active elements.

Functional block 120 generates the actual bits of the selected CSs. These bits are subsequently transformed to analog electrical signals using a simple comparator, filters, and amplifiers for a binary signal or DAC, and other circuits in the case of multilevel codes.

In an embodiment of the present invention, the electrical signal from 120 is sent to transmitters 130 and 135. Each transmitter consists of a laser driver and transmitter optical sub-assembly (TOSA). The two TOSAs illustrated here contain semiconductor lasers with different wavelengths, $\lambda_1$ and $\lambda_2$. The spectral separation between the wavelengths is less than 200nm to avoid excessive bandwidth variations that cannot be compensated by equalizers. The TOSAs also contain lenses or other coupling means to couple the light from the laser to the launch fiber. The input signal to at least one of the transmitters passes through element 125 which contains a programmable equalizer, such as a continuous time linear equalizer or CTLE, and an amplifier having a variable time delay $\Delta\tau$. All parameters are controlled by 120, which also produces the temporal delays and the waveform compensation required to increase the dynamical range of the device according to the principles of the present invention as described in the following subsections. The optical signals from both transmitters are combined using an optical coupler 140, The couplers can be implemented in different technologies such as biconical fused tapered, thin film filter devices, integrated optical circuits, or micro-optics discrete components.

Functional element 145 represents the optical coupling section from where the transmitted signal is sent to the fiber under test 150 and where the returned signal is directed to the optical receiver 160. Element 145 can be implemented using similar technologies as used for 140. Alternatively, 145 can comprise an optical circulator.

Receiver 160 consists of a receiver optical sub-assembly (ROSA) with a photodetector suitable for the optical sources spectra, a transimpedance amplifier, and filters. The photodetector must be capable of efficiently converting the received optical signal to an analog electrical output signal. The analog signal from 160 passes through a bandpass filter that blocks DC and eliminates very low frequency components. Linear amplifier 165 maximizes measurement sensitivity and dynamic range and is controlled by 110. The analog signal from 165 is transmitted to an ADC 170 which converts the signal to an array of bits representing the quantized signal which is then transmitted to the correlation function 175. In function 175, a series of auto- and cross-correlations with the mathematical version of the transmitted CSs are performed. The results of the correlations are transmitted to 110 which storages and reports the reflective events by sending them to 100 for display.

A yet another embodiment, the present invention further omits elements 165 and 170. To implement this embodiment off-the-shelves components similar to low cost small form factor pluggable SFP, SFP+, QSFP+ transceivers can be utilized.

In the currently described embodiment the non-ideal directivity of coupler 145 can be used to provide a reference signal for estimating the power variation and to relax the timer requirements of 115. For example, directivity values between 20dB and 30dB can be used as a marker of the backscattered signals.

This embodiment has lower sensitivity (measurable RL<40dB) and its main application is to detect faulty connectivity in a channel. It can also be implemented as a low-cost solution to test and certify pre-polished field terminator connectors such as Panduit's Opticam® pre-polished connector or other mechanically spliced terminations. For testing field terminated connectors the operation requires that the far end of the channel under test is terminated, A detailed description of the operation for the three embodiments is given in the sections to follow.

METHOD FOR CNF REDUCTION:

A CS sequence such as the Golay code is effective for minimizing CNF when the channel has low noise as shown in Figs. 3A thru 3C. However due to channel noise, the CS signal reaching the detector is not perfectly complementary, which results in an insufficient cancellation of the autocorrelation sidelobes as shown in Figs. 4A thru 4C. The cancelation degrades the temporal separation between the complementary codewords $A_i$ and $B_i$, denominate here as $T_s$. As a result $T_s$ increases and the more $T_s$ increases the greater the likelihood of channel variations. For example, a channel consisting of a transmitter, fiber, and receivers can have laser noise due to relative intensity noise (RIN), mode partition noise (MPN), or noise produced by jitter during the sampling. In prior art C-OTDRs, each CS should ideally be transmitted at $T_s = T_R$ intervals to avoid interference among the codes. For large $T_R$ as required for large $L_{max}$, increases in the differences between the received CS signals exacerbates CNF. For example, if $L_{max}$ = 10km is the range to be measured, $T_R \geq 0.1$ms.

Embodiments of the present invention reduces $T_s$ from $T_R$ to $\Delta t$, which in general is several orders of magnitude smaller than $T_R$. As an example, for the same $L_{max}$ range given above and for a sampling frequency of 5GSa/s, $\Delta t$ = 200ps whereas $T_R$ = 0.1ms.

In order to achieve such a reduction, a method to concatenate and/or interleave two or more CS sequences into one codeword has been developed. Therefore, only one codeword needs to be transmitted which reduces the CNF and increases the test speed. The method to generate the new codeword, denominated here as $C_i$, is described below.

$$c_i = \begin{cases} (1 + a_i), \text{ for odd } i \\ 1 + b_i), \text{ for even } i \end{cases} \tag{9}$$

This signal is transmitted using both of the transmitters as illustrated in the apparatus shown in Fig. 6. The second transmitter uses the negative version of $c_i$ given by,

$$c_i = \begin{cases} (1 - a_i), \text{ for odd } i \\ 1 - b_i), \text{ for even } i \end{cases} \tag{10}$$

It is noted here that in order to implement the CNF reduction method it is not necessary to use both transmitters. For the sake of simplicity in this disclosure we only use one transmitter to describe the CNF method. However, for DR enhancement a second transceiver is required as described in next subsection.

The backscattered optical signal recovered at the receiver with the removal of the $DC$ component is given by,

$$C = c \otimes \theta - DC \tag{11}$$

where $\otimes$ is the convolution operator.

The expansion of the convolution in (11) shows that $C$ can assume different waveforms depending on the position of the discrete reflective events in $\theta$ relative with the sampling of the signals. $j$ is used to indicate the index for the reflected event and we obtain C as described below,

$$C_{Odd} = C_{2i-1} = \begin{cases} \sum_{j=1}^{L} a_{i-j} \rho_j, \text{ for odd } j \\ \sum_{j=1}^{L} b_{i-j} \rho_j, \text{ for even } j \end{cases} \tag{12}$$

$$C_{Even} = C_{2i} = \begin{cases} \sum_{j=1}^{L} b_{i-j} \rho_j, \text{ for odd } j \\ \sum_{j=1}^{L} a_{i-j} \rho_j, \text{ for even } j \end{cases} \tag{13}$$

Two signals $D_1$ and $D_Q$ are computed from $C$,

$$D_I = D_{11} + D_{12} = C_{Odd} \oplus a + C_{Even} \oplus b \tag{14}$$

$$D_Q = D_{21} + D_{22} = C_{Odd} \oplus b + C_{Even} \oplus a \tag{15}$$

The combined correlation trace $E$ is computed as

$$E = D_I + D_Q = D_{11} + D_{12} + D_{21} + D_{22} \tag{16}$$

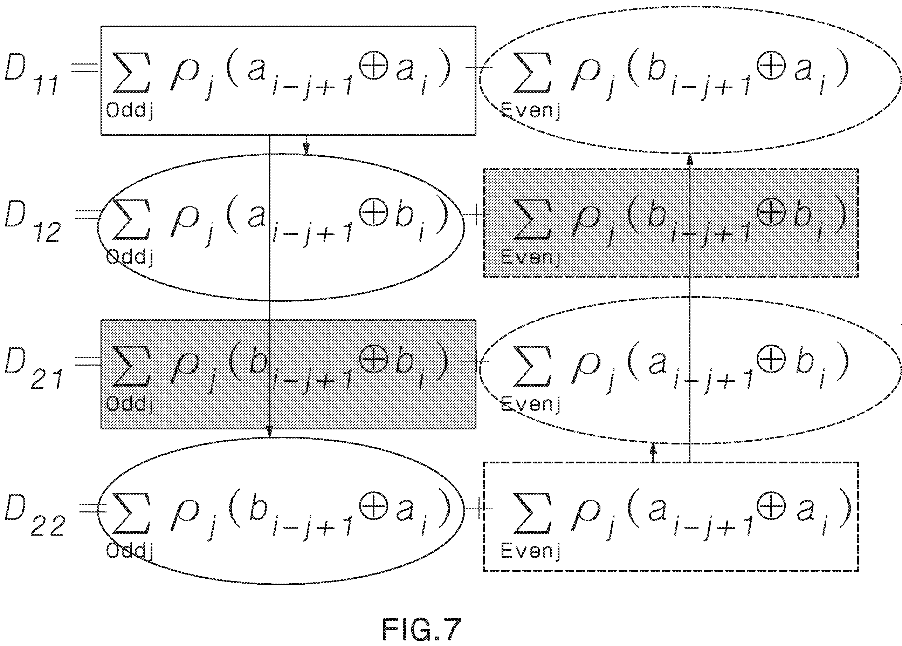

where the terms $D_{11}$, $D_{21}$, $D_{22}$ and $D_{12}$ are shown in Fig. 7. This figure indicates there is a dependence among the correlation noise and correlation peaks. For example, for the even reflective positions the second term in $D_{22}$ (square with dashed lines) can be used to find the position and magnitude of the noise terms in $D_{21}$ and $D_{11}$ (circles dashed

line). Similarly, the first term of $D_{11}$ can be used to find the noise of $D_{12}$ and $D_{22}$ (both in solid line circles). Moreover, the figure shows that no matter where the reflection occurs (odd or even position), the complementary sequences can be obtained with temporal separation $\Delta t$. For example, the *CS* set of the even reflection is found in the second term of $D_{22}$ and the second term of $D_{12}$.

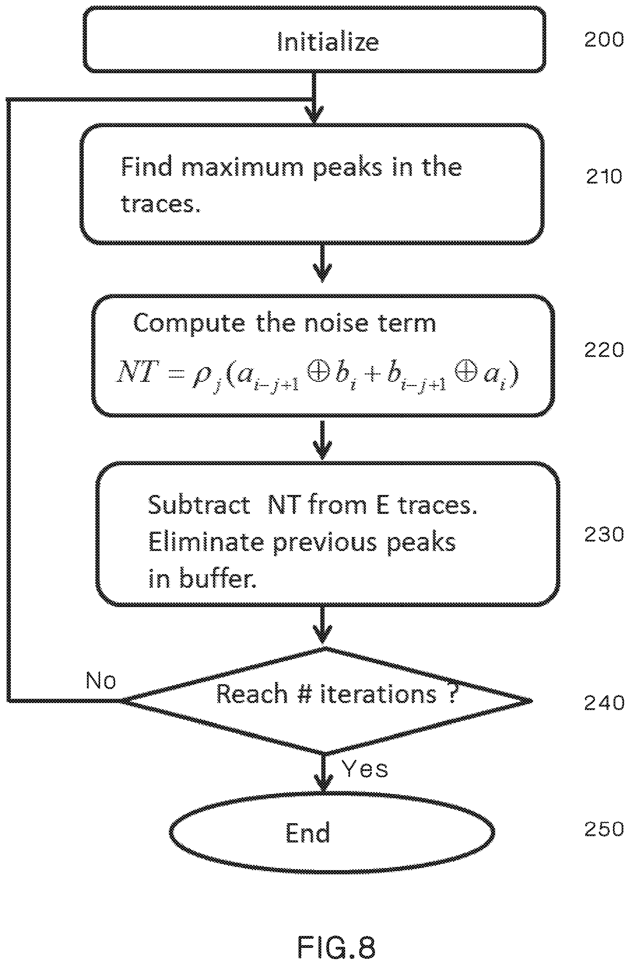

The deterministic nature of the correlation noise indicates a method for eliminating or at least reducing its levels that significantly improves the accuracy of $E$ to map actual reflection events along the channel. The disclosed method is summarized in Fig. 8. The flow diagram in Fig. 8 describes an iterative method to remove the correlation noise. This method takes advantage the correlation noise dependence as shown in Fig. 7 and the fact that the maximum correlation noise peak is $\sqrt{N}$ smaller than the correlation peaks of the signal.

The process starts after receiving the backscattered signal, computing $E$ using Eq. (16) and defining the maximum number of iteration. In step 200 the values of E are stored in a memory buffer, $E_0$. In 210, the position and magnitude of the peak reflection is determined. In step 220 the correlation noise terms are computed and in step 230 these noise terms are subtracted from $E_0$. The process is repeated until the maximum number of iterations is achieved.

The method described above minimizes $T_s$ while reducing or eliminating the interference noise caused by the new code arrangement described in (9), For illustration purposes this method is applied using the following example.

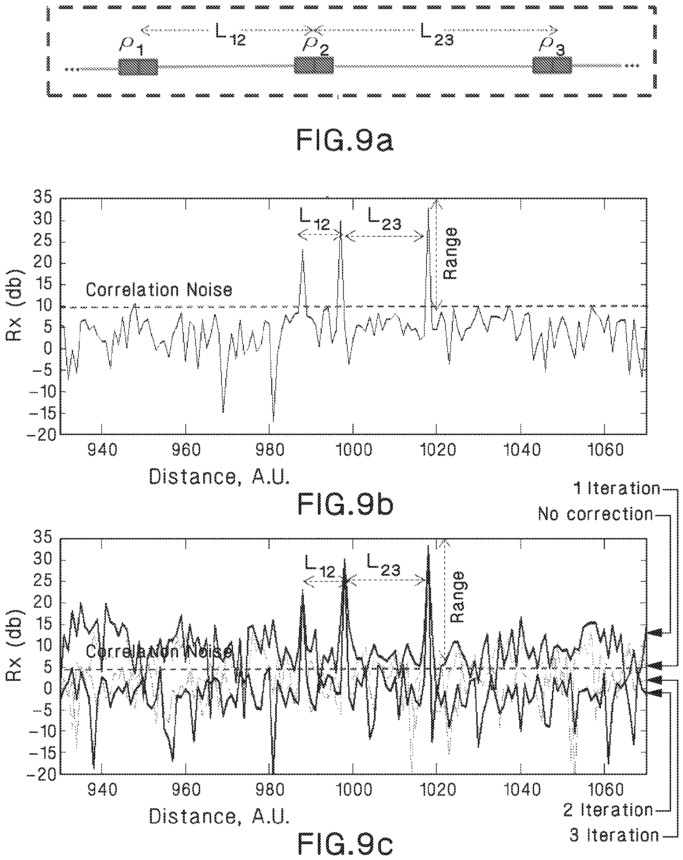

In Fig. 9A a channel with three reflective events having three reflection levels is depicted. The relative magnitudes for these reflective events are given to be 0dB, -3dB and -10dB. The value of $T_R$ is 100μs and it is assumed that more than 50% of the noise occupies a relatively low frequency spectral region compared to the sample rate. In Fig. 9B the resultant trace using prior art. CS sequences with N = 32 to improve CNF is shown, and in Fig. 9C the resultant trace for the disclosed method using 3 iterations is shown. We noted that the original signal labeled "no correction" has more noise than the prior art method since it contains the deterministic correlation noise caused by the interference terms shown in Fig. 7. However, after performed a few iterations of the disclosed method those terms are removed, and the resulting signals have better CNF than the prior art method.

## DYNAMIC RANGE ENHANCEMENT METHOD:

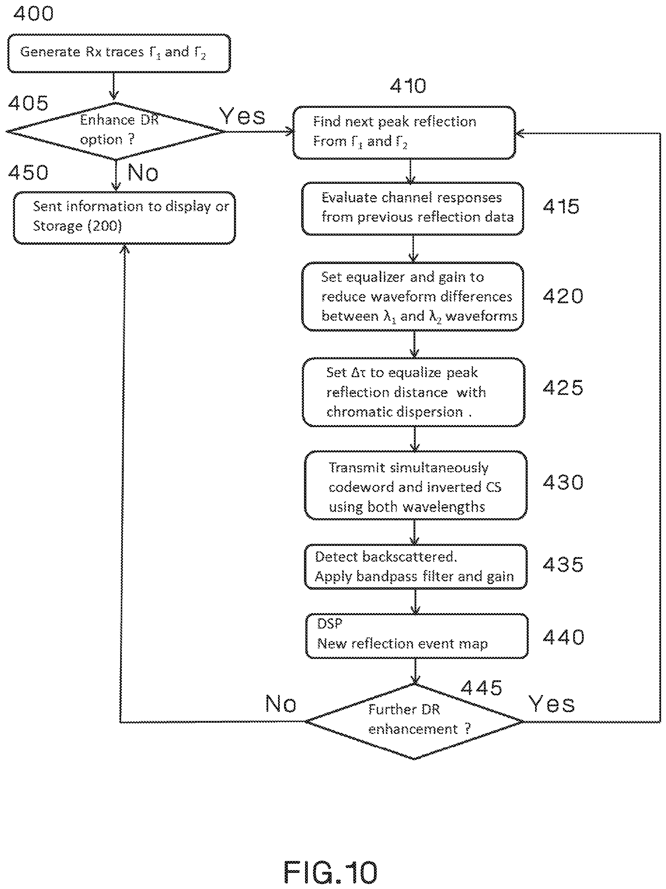

Here a method for improving the DR which is summarized in Fig. 10 is proposed. The method uses two lasers with wavelength separation $\Delta\lambda = (\lambda_1 - \lambda_2)$, a programmable delay line, and filters 125.

In step 400 the reflection event maps for $\lambda_1$ and $\lambda_2$, denominated $\Gamma_1$ and $\Gamma_2$, are obtained separately using either the proposed methods for reducing CNF, or the typical C-OTDR method.

In decision step 405, the process flow depends on the selection of the DR method. For the enhanced DR method, the process starts at 410, else the flow continues to step 450 where the results are sent to element 100 for display and storage. In step 410 the reflection peak positions and magnitudes for each trace are obtained. In 415 the channel responses and $T_\lambda$, defined as the temporal separation between the correlation peaks of signals propagating using $\lambda_1$ and $\lambda_2$ are obtained. Here the channel responses are estimated from the maximum correlation peaks in $\Gamma_1$ and $\Gamma_2$.

Using the width of the correlation peaks in $\Gamma_1$ and $\Gamma_2$ in the temporal domain, or their equivalent spectrum, it is known by those skilled in the art how to estimate the bandwidth variations due to wavelength differences.

In 420 a programmable equalizer included in unit 125 is used to compensate for the variations in channel bandwidth estimated in 415. For example, function 110 selects the CTLE in 125 that minimize the differences between the channels responses for $\lambda_1$ and $\lambda_2$.

In 425, the delay line in 125 is setup for $\Delta\tau = T_\lambda$. It should be noted here that $\Delta\tau$ can also be obtained using

$$\Delta\tau = 2D_{ch}\Delta\lambda\, L_x \tag{17}$$

Where $D_{ch}$ is the chromatic dispersion of the channel and $L_x$ is the position of the maximum reflection peak intended to be cancelled.

In 430 two sequences are transmitted using the delay introduced in 425. For sake of simplicity, in this description we only use one codeword of the CSs. In general, however, it is possible to use a prior art CS or the method disclosed above to reduce CNF. Here the codeword for the transceivers is given by

$$S_1 = 1 + a_i, \quad for\ \lambda_1$$
$$S_2 = 1 - a_i, \quad for\ \lambda_2 \tag{18}$$

In 435 the backscattered signal is detected in function 160 and passed through 165 where the bandpass filter eliminates the DC and low frequencies components. The signal is quantized in 170 and correlated in 175.

In 440 the new reflection event trace is obtained. Additional signal processing can be performed to improve the traces. The positive and negative part of the traces are separated in $\Gamma+$ and $\Gamma_-$. Then the temporal delays of the events are converted to event locations using Eqs. (3) and (4) and the corrected $n$ for each wavelength. This result is two different position axes for $\Gamma_+$ and $\Gamma_-$. Finally, the backscattering correlations are performed, and the final trace is computed as

$$\Gamma(x) = \begin{cases} \Gamma_+(x) - \Gamma_-(x - X_\lambda) & if \quad \Gamma_+(x) - \Gamma_-(x - X_\lambda) > 0 \\ 0 & if \quad \Gamma_+(x) - \Gamma_-(x - X_\lambda) < 0 \end{cases} \tag{19}$$

where $X_\lambda = \Delta\tau(v\lambda_1 - v\lambda_2)$ and $v\lambda_1$, $v\lambda_2$ are the group velocities of the light at $\lambda_1$ and $\lambda_2$ respectively,

Due to a lack of temporal resolution or excessive noise the additional processing performed in 440 might not be applied. In that case, the final trace is given by

$$\Gamma = \Gamma_+ \tag{20}$$

The new trace, $\Gamma$, in 440 has either eliminated or reduced the peak reflection of the previous trace. If another region of the trace needs to be improved the process returns to 410 where the magnitude and position of the new targeted peak is obtained. Otherwise the process ends sending the processed information to 200.

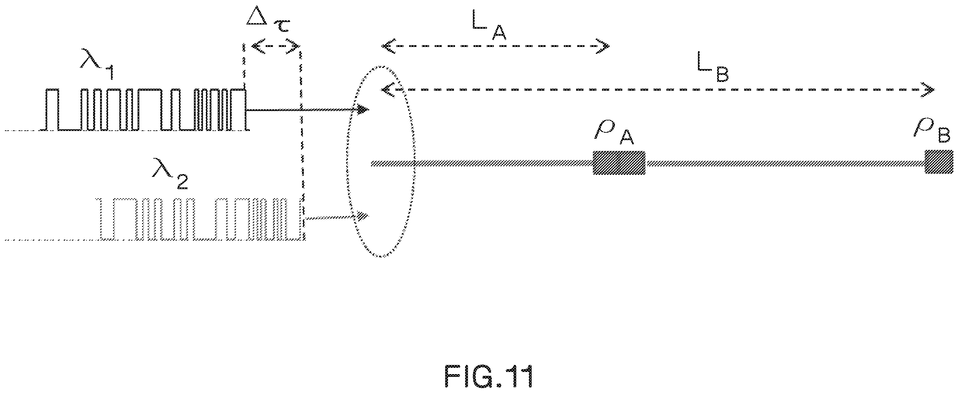

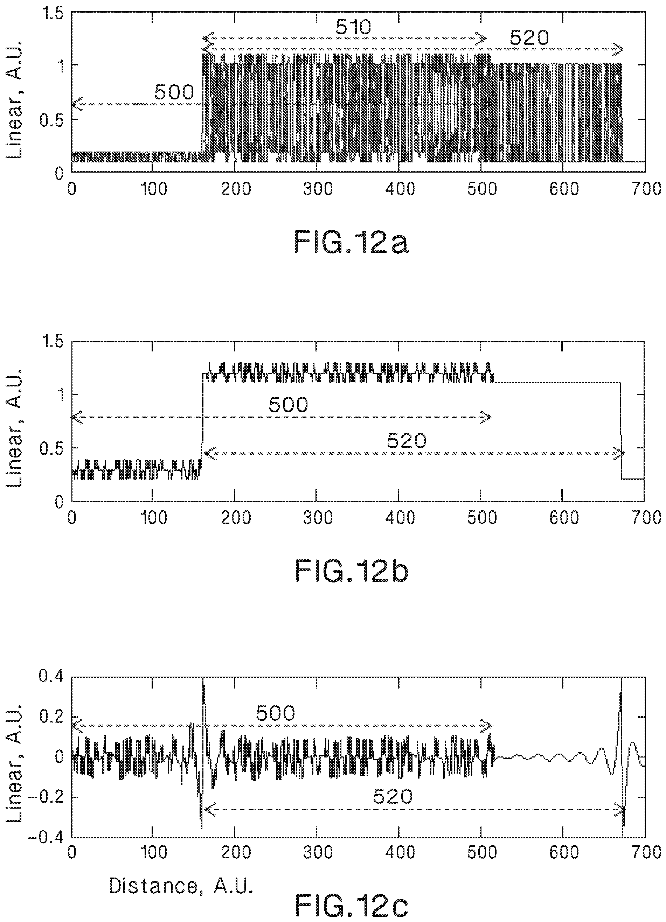

For purposes of illustration consider a channel containing two reflective events $p_A$ and $p_B$ as shown in Fig. 11. The temporal distances for these events are $T_A$ and $T_B$ respectively, where $p_A \ll p_B$. We select $L_A - L_B$ to be smaller than $N\Delta x$ in order to produce a sequence overlap and illustrate the DR enhancement operation. In Fig. 12A the optical signals $S_1$ and $S_2$ for the two wavelengths just before reaching the receiver is shown. Three regions are identified in this figure: 500, 510 and 520. Region 500 contains the sequence backscattered by the weak reflection located at $L_A$. Region 520 contains the sequence backscattered by the strong reflection located at $T_B$ and region 510 contains the overlap signals. In this example,

$$t_\lambda = 2L_B \left( \frac{1}{v_{\lambda 1}} - \frac{1}{v_{\lambda 2}} \right) \tag{21}$$

in region 520 due to the assigned delay given by $\Delta\tau = T_\lambda$, $S_1$ and $S_2$ are out of phase. Therefore, the sum of $S_1$ and $S_2$ which occurs after detection in 160 produces a strong DC component as shown in Fig. 12B. The signal in region 500 does not have this strong DC component since the utilized delay does not result in a phase shift.

After the optical-to-electrical conversion in 160 the signal is sent to 165 where a low pass filter is applied. The resultant signal is shown in Fig. 12C. We observe that the DC component in this region 500 is removed and the signal from the weak reflection is recovered. The glitches shown at the edges of region 520 are a consequence of the filtering process and is the residual noise of the channel. The filtered signal is amplified and quantized in 170 and the correlation is performed in 175.

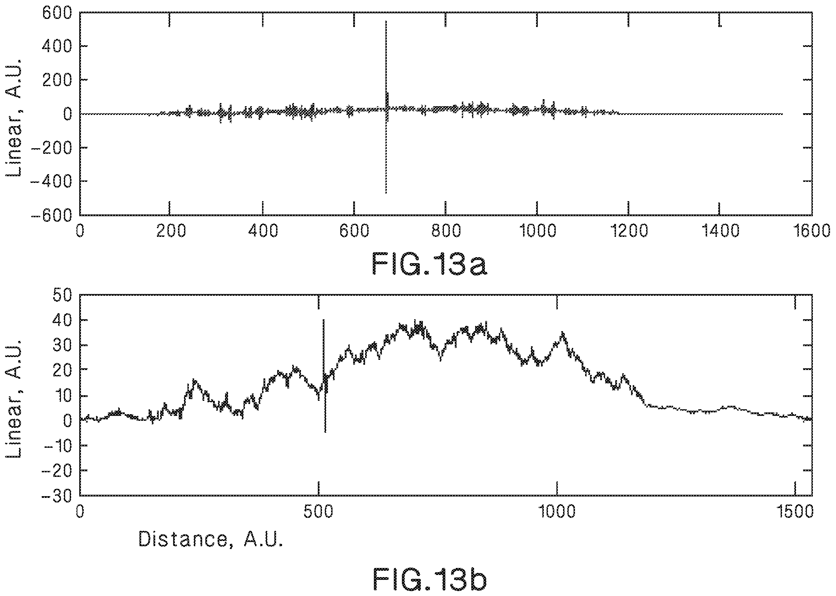

In Figs. 13A and 13B the correlation traces at different stages of the process is shown. The signals are not captured during the disclosed method and are only shown here for illustration purposes. Fig. 13A shows a representation of the correlations of the backscattered $S_1$ and $S_2$ before detection. Due to the assigned delay, their correlation peaks are located at the same temporal positions and have different signs. In Fig. 13B we show the correlation after detection 160 and before the filtering performed in 165.

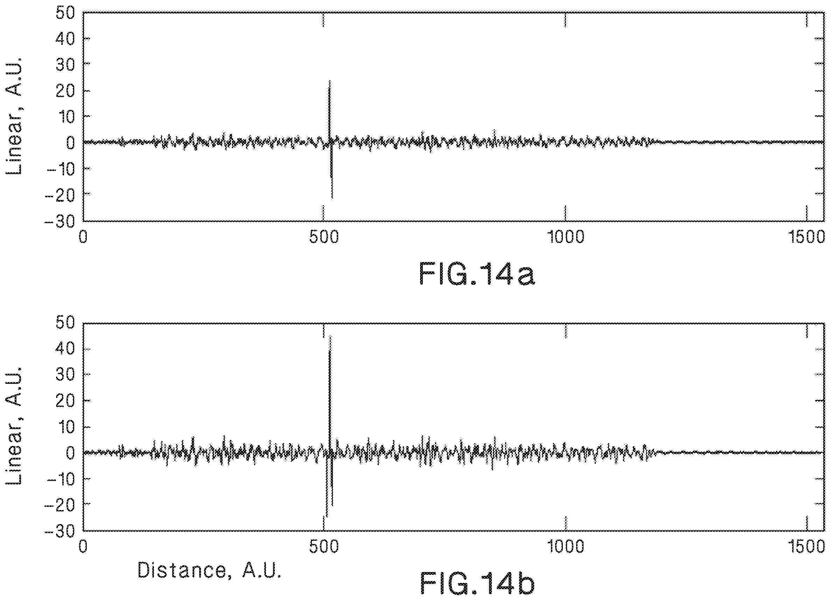

Fig. 14A shows the correlation of the sum after low frequency filtering and Fig. 14B shows the subtraction of negative peaks from the positive peaks which is the optional processing described in 440.

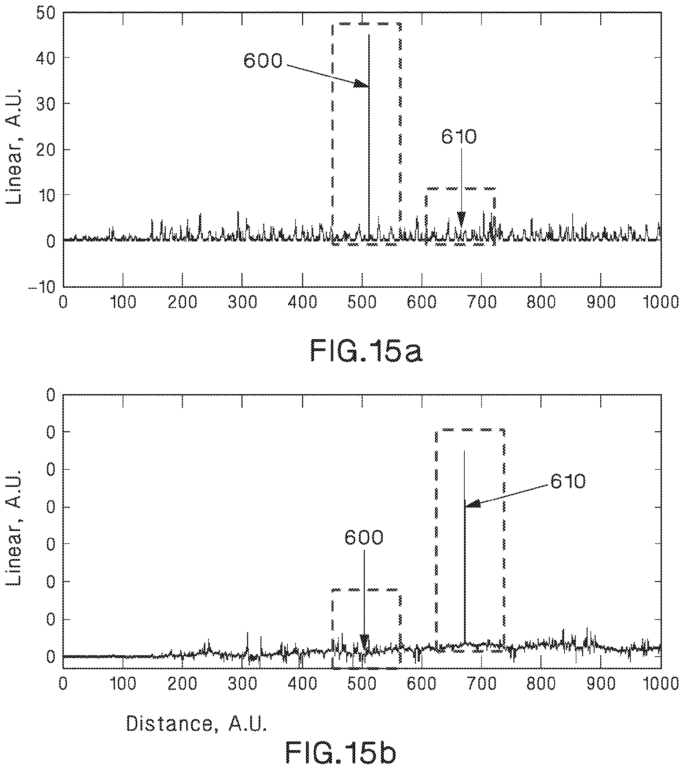

Figs. 15A and 15B show a comparison of the traces with DR. enhancement (a) and without DR enhancement (b). In Fig. 15A the label 600 shows the correlation peak that represents $p_A$ whereas the 610 shows the residual noise from $p_B$.

In Fig. 15B the predominant correlation peak 610 that correspond to $p_B$ without DR enhancement is shown. Due to its sidelobes, the weak reflection $p_A$ cannot be observed. In practice the DR enhancement shown in this example produces a virtual termination of the open or defective connector represented by $p_B$ enables other reflective events in the channel to be observed.

Three proposed embodiments of the present invention are summarized in Table 1 below.

TABLE I Applications of the disclosed embodiments

|  | CNF | DR | Sensitivity | Resolution | Application |
|---|---|---|---|---|---|
| Embodiment 1 | Y | Y | Very High | High | SMF, MMF, Short/long reaches, connector test, field terminator |
| Embodiment 2 | Y | N | High | High | SMF, MMF, Short/long reaches, connector test, field terminator |
| Embodiment 3 | Y | N | Low | Medium | connector test, field terminator |

Note that while this invention has been described in terms of several embodiments, these embodiments are non-limiting (regardless of whether they have been labeled as exemplary or not), and there are alterations, permutations, and equivalents, which fall within the scope of this invention. Additionally, the described embodiments should not be interpreted as mutually exclusive and should instead be understood as potentially combinable if such combinations are permissive. It should also be noted that there are many alternative ways of implementing the methods and apparatuses of the present invention. It is therefore intended that claims that may follow be interpreted as including all such alterations, permutations, and equivalents as fall within the scope of the present invention.

**Claims**

1. A correlation optical time-domain reflectometer , C-OTDR, configured to utilize at least two interleaved correlation codes ($c_i$) transmitted in the same sequence to produce noise cancellation of spurious reflected signals that may occur during optical channel measurements;

   wherein the C-OTDR comprises a first transmitter (130) with a first wavelength ($\lambda_1$) having a first signal comprising a first code and a second transmitter (135) with a second wavelength ($\lambda_2$) , different from the first wavelength, having a second signal comprising a second code, wherein the second code is a negative version of the first code; and
   wherein the C-OTDR further comprises an optical coupler (140) configured to combine the first signal and second signal, and a functional element (145) configured to transmit the combined first signal and second signal to a test optical channel (150).

2. An apparatus according to claim 1 wherein complementary pseudo random codes with low cross-correlation properties are utilized for improved efficiency, increased signal to noise ratio, and enhance spatial resolution.

3. An apparatus according to claim 1 configured to utilize fast transmission signals >2 Gb/s to increase the spatial resolution of the performed measurement.

**Patentansprüche**

1. Ein optisches Korrelationszeitbereichsreflektometer, C-OTDR, ausgelegt zum Nutzen von mindestens zwei in der gleichen Sequenz übertragenen verschachtelten Korrelationscodes ($c_i$), um eine Rauschaufhebung von reflektierten Störsignalen zu erzeugen, die während optischer Kanalmessungen auftreten können;

   wobei das C-OTDR einen ersten Sender (130) mit einer ersten Wellenlänge ($\lambda_1$) mit einem einen ersten Code umfassenden ersten Signal und einen zweiten Sender (135) mit einer von der ersten Wellenlänge verschiedenen zweiten Wellenlänge ($\lambda_2$) mit einem einen zweiten Code umfassenden zweiten Signal umfasst, wobei der zweite Code eine negative Version des ersten Codes ist; und
   wobei das C-OTDR weiter einen Optokoppler (140) umfasst, der ausgelegt ist zum Kombinieren des ersten Signals und des zweiten Signals, und ein Funktionselement (145), das ausgelegt ist zum Übertragen des kombinierten ersten Signals und zweiten Signals, um einen optischen Kanal (150) zu testen.

2. Vorrichtung nach Anspruch 1, wobei komplementäre Pseudozufallscodes mit niedrigen Kreuzkorrelationseigenschaften für verbesserte Effizienz, ein höheres Signal-Rausch-Verhältnis und zum Steigern der räumlichen Auflösung genutzt werden.

3. Vorrichtung nach Anspruch 1, ausgelegt zum Nutzen von Schnellübertragungssignalen >2 Gb/s, um die räumliche Auflösung der durchgeführten Messung zu erhöhen.


**Revendications**

1. Réflectomètre optique temporel à corrélation C-OTDR, configuré pour utiliser au moins deux codes de corrélation entrelacés ($c_i$) transmis dans la même séquence pour produire une annulation du bruit des signaux réfléchis parasites qui peuvent se produire pendant des mesures de canaux optiques ;

   où le C-OTDR comprend un premier émetteur (130) avec une première longueur d'onde ($\lambda_1$) ayant un premier signal comprenant un premier code et un second émetteur (135) avec une seconde longueur d'onde ($\lambda_2$), différente de la première longueur d'onde, ayant un second signal comprenant un second code, où le second code est une version négative du premier code ; et
   où le C-OTDR comprend en outre un coupleur optique (140) configuré pour combiner le premier signal et le second signal, et un élément fonctionnel (145) configuré pour transmettre les premier et second signaux combinés à un canal optique de test (150).

2. Appareil selon la revendication 1, dans lequel des codes pseudo-aléatoires complémentaires ayant de faibles propriétés de corrélation croisée sont utilisés pour une efficacité améliorée, un rapport signal/bruit accru, et une résolution spatiale améliorée.

3. Appareil selon la revendication 1, configuré pour utiliser des signaux de transmission rapide >2 Gb/s pour augmenter la résolution spatiale de la mesure effectuée.

Fig.1a

Fig.1b

Fig.1c

Fig.1d

Launch Pulse

$T_p$

Time

Fig.2a

OTDR trace

Position

Fig2b

Launch Sequence

$T_{seq}$

Time

Fig.2c

C−OTDR trace

Position

Fig.2d

EP 3 593 468 B1

FIG.3a

FIG.3b

FIG.3c

FIG.4a

FIG.4b

FIG.4c

FIG.5

FIG.6

EP 3 593 468 B1

$$D_{11} = \boxed{\sum_{\text{Odd}j} \rho_j\left(a_{i-j+1} \oplus a_i\right)} \quad \overline{\left(\sum_{\text{Even}j} \rho_j\left(b_{i-j+1} \oplus a_i\right)\right)}$$

$$D_{12} = \left(\sum_{\text{Odd}j} \rho_j\left(a_{i-j+1} \oplus b_i\right)\right) \quad \boxed{\sum_{\text{Even}j} \rho_j\left(b_{i-j+1} \oplus b_i\right)}$$

$$D_{21} = \boxed{\sum_{\text{Odd}j} \rho_j\left(b_{i-j+1} \oplus b_i\right)} \quad \overline{\left(\sum_{\text{Even}j} \rho_j\left(a_{i-j+1} \oplus b_i\right)\right)}$$

$$D_{22} = \left(\sum_{\text{Odd}j} \rho_j\left(b_{i-j+1} \oplus a_i\right)\right) \quad \overline{\boxed{\sum_{\text{Even}j} \rho_j\left(a_{i-j+1} \oplus a_i\right)}}$$

FIG.7

EP 3 593 468 B1

FIG.8

FIG.9a

FIG.9b

FIG.9c

**400**

Generate Rx traces $\Gamma_1$ and $\Gamma_2$

**405**

Enhance DR option ?

**410**

Yes → Find next peak reflection From $\Gamma_1$ and $\Gamma_2$

**450**

No

Sent information to display or Storage (200)

Evaluate channel responses from previous reflection data **415**

Set equalizer and gain to reduce waveform differences between $\lambda_1$ and $\lambda_2$ waveforms **420**

Set $\Delta\tau$ to equalize peak reflection distance with chromatic dispersion . **425**

Transmit simultaneously codeword and inverted CS using both wavelengths **430**

Detect backscattered. Apply bandpass filter and gain **435**

DSP New reflection event map **440**

**445**

No ← Further DR enhancement ? → Yes

# FIG.10

FIG.11

FIG.12a

FIG.12b

FIG.12c

FIG.13a

FIG.13b

EP 3 593 468 B1

FIG.14a

FIG.14b

Distance, A.U.

FIG.15a

FIG.15b

## REFERENCES CITED IN THE DESCRIPTION

### Patent documents cited in the description

- US 62469596
- US 4743753 A, Cheng
- US 2009027656 A1
- WO 2013134394 A1

### Non-patent literature cited in the description

- **M. J. E. GOLAY.** Complementary Series. *IRE Trans.on information Theory,* 1961, vol. IT-7, 82
- **P, HEALY.** Complementary Correlation OTDR With Three Codewords. *Electron. Lett.,* 1990, vol. 26, 70-71
- **GOLAY ; HADAMAR, P. HEALY.** Complementary Code Sets for OTDR. *Electron. Lett.,* 1989, vol. 25, 692-693